(19) Europäisches Patentamt

European Patent Office

Office européen des brevets

(11) Veröffentlichungsnummer: **0 291 908 B1**

(12) **EUROPÄISCHE PATENTSCHRIFT**

(45) Veröffentlichungstag der Patentschrift: **29.07.92**

(21) Anmeldenummer: **88107829.9**

(22) Anmeldetag: **16.05.88**

(51) Int. Cl.⁵: **B29B 7/80**, B29C 31/04, B29C 47/02, G02B 6/00, //B29L11/00,B29K105/04

(54) Verfahren und Vorrichtung zur Aufbereitung und Zuführung von Füllmassen für Lichtwellenleiteradern.

(30) Priorität: **19.05.87 DE 3716790**

(43) Veröffentlichungstag der Anmeldung:
**23.11.88 Patentblatt 88/47**

(45) Bekanntmachung des Hinweises auf die Patenterteilung:
**29.07.92 Patentblatt 92/31**

(84) Benannte Vertragsstaaten:
**AT BE CH DE FR GB IT LI NL SE**

(56) Entgegenhaltungen:
**EP-A- 0 066 201
EP-A- 0 200 152
DE-A- 2 946 027
DE-B- 2 406 686**

(73) Patentinhaber: **SIEMENS AKTIENGESELL-
SCHAFT
Wittelsbacherplatz 2
W-8000 München 2(DE)**

(72) Erfinder: **Mayr, Ernst, Ing. grad.
Wernbergstrasse 5
W-8130 Starnberg(DE)**

## Beschreibung

Die Erfindung betrifft ein Verfahren zur Aufbereitung und Zuführung von Füllmasse für Lichtwellenleiteradern, bei denen die Füllmasse aus einem Vorratsbehälter entnommen und mittels einer Füllnadel in den freien Raum zwischen einer äußeren Schutzhülle und dem Lichtwellenleiter eingebracht wird.

Aus der DE-OS 35 16 206 ist es bekannt, daß Einschlüsse von Gasbläschen in Füllmassen infolge hohen Fülldrucks stark komprimiert werden. Beim Austreten z.B. aus der Füllnadel erfolgt dann eine derart starke Expansion, daß es zum Abreißen oder zumindest zum Schädigen der empfindlichen Aderhülle oder der Lichtleitfaser kommen kann. Bei dem bekannten Verfahren wird dieses Problem im wesentlichen dadurch gelöst, daß eine Entgasung der Füllmasse durchgeführt wird. Ein derartiges Vorgehen setzt jedoch voraus, daß das gesamte Rohrleitungs- und Behältersystem stets geschlossen gehalten wird, so daß der Unterdruck während aller Füllvorgänge immer erhalten bleibt.

Der vorliegenden Erfindung liegt die Aufgabe zugrunde, ein Verfahren anzugeben, mit welchem die Aufbereitung der Füllmasse unter geringerem Aufwand durchgeführt werden kann und gleichzeitig sichergestellt ist, daß es zu keiner Schädigung der Lichtwellenleiter oder der Schutzhülle kommt. Gemäß der Erfindung, welche sich auf ein Verfahren der eingangs genannten Art bezieht, wird diese Aufgabe dadurch gelöst, daß die nicht entgaste Füllmasse aus dem Vorratsbehälter mittels einer ersten Pumpe abgeführt wird, daß bei oder nach dieser Pumpe eine Druckbegrenzung auf Werte zwischen 3 und 10 bar durchgeführt wird, und daß die Füllmasse vom Ausgang dieser Pumpe aus über eine zweite, dosierende Pumpe der Füllnadel zugeführt wird.

Bei der Erfindung wird somit von einer nichtentgasten Füllmasse ausgegangen, so daß entsprechende Unterdruck- und Absaugeinrichtungen nicht erforderlich sind. Auch ist die beim Unterdruckverfahren notwendige Regelung des Vakuums (ein zu hohes Vakuum führt zu einem Aufschäumen der Füllmasse) vermieden. Damit sind sowohl die verwendeten Behältnisse als auch die Pumpen und Rohrleitungssysteme einfacher zu gestalten.

Die durch ein Überstromventil überbrückte (erste) Zahnradpumpe führt dazu, daß ein etwa in der Füllmasse vorhandener größerer Lufteinschluß in viele äußerst kleine Bläschen aufgeteilt wird. Gleichzeitig werden diese Luftbläschen unter einen vorgegebenen Druck gesetzt, wobei der Druckwert durch die Druckbegrenzung an dieser Zahnradpumpe eingestellt wird. Durch diesen Druck geht ein Teil der sehr kleinen Bläschen in der Füllmasse in Lösung und tritt meist auch bei der Expansion im Bereich der Füllnadel nicht mehr in Erscheinung. Etwaige trotzdem noch verbleibende kleine Bläschen stören oder beeinträchtigen die Fertigung in keiner Weise.

Die Erfindung betrifft weiterhin eine Einrichtung zur Durchführung des erfindungsgemäßen Verfahrens, welche dadurch gekennzeichnet ist, daß für die nicht entgaste Füllmasse ein Vorratsbehälter vorgesehen ist, an dessen Ausgang die erste Pumpe angeschlossen ist, daß nach dieser ersten Pumpe eine Druckbegrenzungseinrichtung vorgesehen ist und daß vor der Füllnadel eine zweite dosierende Pumpe angeordnet ist.

Sonstige Weiterbildungen der Erfindung sind in Unteransprüchen wiedergegeben.

Die Erfindung und ihre Weiterbildungen werden nachfolgend anhand einer Zeichnung näher erläutert, in der eine Aufbereitungs- und Füllanlage zur Durchführung des erfindungsgemäßen Verfahrens dargestellt ist.

Die Füllmasse wird in großen Fässern mit z.B. einigen hundert Litern Inhalt angeliefert, von denen im vorliegenden Beispiel zwei dargestellt und mit FR1 und FA2 bezeichnet sind. Diese Fässer FR1 und FA2 sind mit einem Deckel FD1 und FD2 verschlossen, welcher in der Art eines Kolbens verschoben werden kann und eine Durchtrittsöffnung für eine Rohrleitung LF1 bzw. LF2 aufweisen. Durch die Bewegung der Deckel FD1 bzw. FD2 in Richtung auf den Faßboden hin, welche mittels der Faßpumpen FP1 und FP2 bewirkt wird, wird die Füllmasse FM nach oben gedrückt und über die Faßpumpen und ein Magnetventil MVF einer gemeinsamen Zuleitung ZL zugeführt. Diese Zuleitung ZL kann mehrfach ausgebildet sein und zwar zweckmäßig so, daß für jedes vorhandene Faß eine eigene Leitung vorgesehen ist. Im vorliegenden Beispiel würde also eine Zwillingsleitung vorgesehen. Dies hat den Vorteil, daß bei den Fässern FR1 und FA2 mit ununterbrochenem Betrieb gearbeitet werden kann und zudem z.B. eine Reinigung der einen (z.B. mit dem Faß FR1 verbundenen) Leitung erfolgen kann, während das andere Faß (z.B. FA2) entleert wird.

Am Ende der gemeinsamen Zuleitung ZL ist ein Magnetventil MVZ vorgesehen. Für das nachfolgende Beispiel ist angenommen, daß insgesamt drei Aderfülleinrichtungen parallel betrieben werden sollen, weshalb auch drei Vorratsbehälter VB1, VB2 und VB3 vorgesehen sind. Jeder dieser Vorratsbehälter VB1 - VB3 ist über ein Magnetventil MVV1 und eine getrennte Zuführungsleitung VZ1, VZ2 und VZ3 mit der gemeinsamen Zuleitung ZL verbunden.

Nachfolgend wird im einzelnen nur der Aufbau und die Arbeitsweise der mit dem Vorratsbehälter VB1 zusammenarbeitenden Fülleinrichtung beschrieben; die übrigen Vorratsbehälter VB2 und VB3 werden in analoger Weise betrieben.

Der Vorratsbehälter VB1 ist in seinem unteren Teil etwa konisch verjüngt, und besteht zweckmäßig aus Edelstahl. Die Füllmasse FM wird durch zwei Füllstandsüberwachungen auf ausreichend großen Wert gehalten, wobei die Füllstandsüberwachungseinrichtung FSN1 die Zuführung von Füllmaterial bei Unterschreiten in die Wege leitet (durch Betätigung der Faßpumpen FP1 bzw. FP2 und Öffnen der entsprechenden Ventile), während der für den Maximalwert vorgesehene Füllstandsmesser FSX1 die Zuführung von Füllmasse FM unterbricht, wenn der Vorratsbehälter VB1 ausreichend gefüllt ist. Der Vorratsbehälter VB1 ist oben durch einen Deckel DK1 verschlossen, wobei im Inneren des Vorratsbehälters VB1 der normale atmosphärische Druck vorhanden ist, also kein Unterdruck vorgesehen wird. Für die Zuführung der Füllmasse ist am Eingang des Vorratsbehälters VB1 ein Sieb SB1 vorgesehen, welches leicht ausgewechselt werden kann, weil es im beweglichen Deckel DK1 angeordnet ist. Da die gesamte Anlage unter normalem atmosphärischen Druck steht, ist auch der Ausbau oder die Auswechslung des Siebes ohne Schwierigkeiten möglich.

Am unteren Ausgang des Vorratsbehälters VB1 ist eine erste Zahnradpumpe ZP11 vorgesehen, welche an ihrem Ausgang eine Druckbegrenzungseinrichtung aufweist. Diese Druckbegrenzungseinrichtung ist im vorliegenden Beispiel als ein Überbrückungsventil UV dargestellt, welches den Ausgang der Zahnradpumpe ZP11 mit deren Eingang verbindet. Bei Überschreiten eines eingestellten Druck-Grenzwertes öffnet dieses Überstromventil UV und hält damit den Ausgangsdruck der Zahnradpumpe ZP11 fest. Es ist zweckmäßig am Ausgang der Zahnradpumpe mit Druckwerten zwischen 3 und 10 bar zu arbeiten, wobei besonders der Bereich um 9 bar zweckmäßig ist. An Stelle der Verwendung eines Überstromventils UV könnte auch z.B. ein, einfaches Ableitventil nach der Zahnradpumpe ZP11 vorgesehen sein, welches die bei Überschreitung des Grenzdruckes austretende Füllmasse z.B. in einem Behälter oder dergleichen aufzufangen gestattet. Letzteres hat gegenüber einem Überstromventil UV mit Rückführung den Nachteil, daß kein geschlossenes System vorhanden ist und die ausströmende Füllmasse erst wieder, z.B. in eines der Fässer FA1 oder FA2 zurückgeführt werden muß.

Etwaige Lufteinschlüsse in der Füllmasse FM, welche je nach dem Füll- und Entleerungsvorgang auch ein größeres Volumen umfassen können, werden durch die Wirkungsweise der ersten Zahnradpumpe ZP11 so beeinflußt, daß sehr kleine Luftbläschen gebildet werden, deren Größen (Durchmesser) unterhalb von 5 $\mu$m liegt. Darüberhinaus bewirkt die Zahnradpumpe ZP11 durch die entsprechend feine Verteilung der Gasbläschen, daß ein großer Teil von ihnen ohnehin in der Füllmasse in Lösung geht und dadurch nicht weiter in Erscheinung tritt. Letzteres ist besonders dann der Fall, wenn in der Füllmasse, welche vorzugsweise aus einem Öl und/oder Kohlenwasserstoffpolymeren und einem Thixotropierungsmittel besteht, als Thixotropierungsmittel fein verteiltes pyrogenes und damit eine große Oberfläche aufweisendes Siliziumdioxid verwendet wird. Besonders geeignet hierfür sind hochdispersive Materialien wie sie z.B. unter dem Handelsnamen "AEROSIL" der Firma Degussa bekannt sind. An den großen Oberflächen dieser feinen Siliziumpartikel (mit Außendurchmessern unterhalb 100 m$\mu$) werden feine Gasbläschen besonders gut gebunden und gehen auch nach der Aufhebung des Überdrucks nicht wieder als freie Teilchen z.B. in der Füllmasse auf Wanderschaft.

Die Füllmasse gelangt über eine Leitung LE12 zu einer weiteren Zahnradpumpe ZP12, welche als dosierende Pumpe arbeitet. Dies bedeutet, daß von dieser Zahnradpumpe, deren Umdrehungszahl von einer zentralen Steuereinrichtung STE entsprechend geregelt wird, gerade so viel Füllmasse ausgegeben wird, wie sie von einer nachfolgenden Füllmasse zum Schließen des Hohlraumes innerhalb einer Lichtwellenleiterader benötigt wird. Die Füllnadel FN wird vor oder in der Durchtrittsöffnung eines Extruderkopfes EX angeordnet, aus dem das Material der Schutzhülle in Form eines Reckkegels RK austritt. Dieser Reckkegel wird so lange durch Längszug verengt, bis er den für die Bildung einer Schutzhülle SH gewünschten Außendurchmesser erreicht hat. Gegebenenfalls können auch (hier nicht näher dargestellte) Kühleinrichtungen vorgesehen sein. Am Ende des Reckvorganges liegt die fertige Lichtwellenleiterader LWA vor. Durch eine Geschwindigkeitsmeßeinrichtung VM wird die Abzugsgeschwindigkeit der Schutzhülle SH bestimmt, wobei diese Meßgröße der Steuereinrichtung STE zugeleitet wird, die ihrerseits die Umdrehungszahl der Zahnradpumpe ZP12 so steuert, daß genau die gewünschte dosierte Menge an Füllmasse FM zugeführt wird, welche benötigt wird, um den Innenraum der Schutzhülle SH vollständig zu füllen.

Die Zahnradpumpe ZP12 arbeitet zeckmäßig mit Außendrücken in der Größenordnung von 2 bis 100 bar je nach Produkt. Diese Druckwerte unterscheiden sich vom Druck der ersten Zahnradpumpe ZP11, welche zwischen den Werten 3 und 10 liegt. Anstelle von Zahnradpumpen können auch sehr genau dosierende Kolbenpumpen oder Schneckenpumpen verwendet werden.

Etwaige in der Füllmasse FM im Vorratsbehälter VB1 enthaltene größere Lufteinschlüsse sind durch die Wirkung der ersten Zahnradpumpe ZP11 so stark beseitigt bzw. in so kleine Luftbläschen umgewandelt, daß diese zu keiner Störung mehr führen können. Winzig kleine Lufteinschlüsse innerhalb der Füllmasse FM, deren kontinuierlicher Austritt aus der Füllnadel FN durch diese kleinsten Lufteinschlüsse nicht beeinträchtigt wird, führen zu keiner Störung des Fertigungsbetriebes oder zu einer Beeinträchtigung der Eigenschaften der Lichtwellenleiterader LWA.

Um einen noch besseren Schutz der Lichtleitfaser LW1 und um eine sichere Benetzung der trockenen Fasern zu erreichen, kann eine Vorbeschichtung erfolgen, beispielsweise mit einer Vorbeschichtungseinrichtung VE. Der Lichtwellenleiter LW1 wird in diese Vorbeschichtungseinrichtung VE eingeführt, wobei gleichzeitig über eine weitere Zahnradpumpe ZPV ein abgezweigter kleiner Teil aus der Füllmasse des Vorratsbehälters VB1 entnommen und außen auf den Lichtwellenleiter LW1 aufgetragen wird. Damit ist der Lichtwellenleiter LW1 im Bereich der Austrittsöffnung der Füllnadel FN schon mit einem z.B. 30 % bis 50 % der künftigen Füllmassenmenge umfassenden FüllmassenÜberzug versehen. Mit Hilfe dieser Vorbeschichtung kann auch eine definierte Faserabbremsung durchgeführt werden.

Wird eine trockene, d.h. nicht vorbeschichtete Faser durch eine Füllmasse gezogen, so entsteht je nach Geschwindigkeit ein kleinerer oder größerer Trichter. Ab einer bestimmten Geschwindigkeit werden dann Luftblasen in die Nadel mitgerissen und führen zu Störungen. Bei mehreren Fasern werden dann im Bündel Luftblasen eingeschlossen und führen zu Störungen.

Es ist selbstverständlich auch möglich, nicht nur einen einzelnen Lichtwellenleiter sondern mehrere Lichtwellenleiter oder ein Lichtwellenleiterbündel in die Schutzhülle SH einzufügen. Ein weiterer derartiger Lichtwellenleiter ist gestrichelt am Eingang der Vorbeschichtungseinrichtung VE angedeutet und mit LW2 bezeichnet.

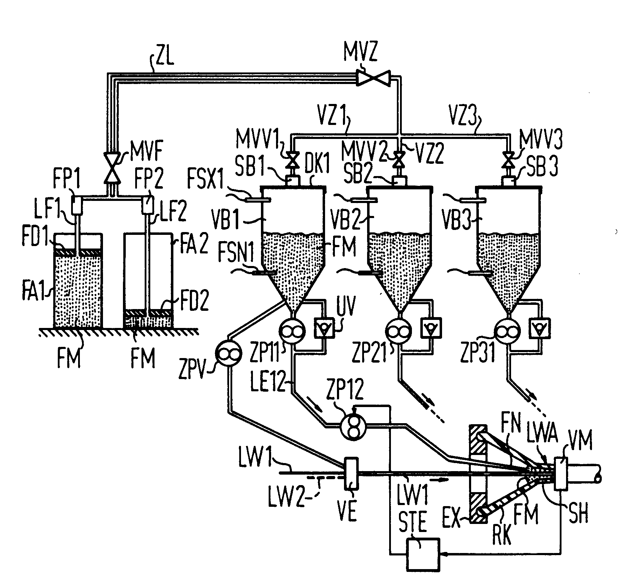

**Patentansprüche**

1. Verfahren zur Aufbereitung und Zuführung von Füllmasse für Lichtwellenleiteradern (LWA), bei denen die Füllmasse aus einem Vorratsbehälter (VB13) entnommen und mittels einer Füllnadel (FN) in den freien Raum zwischen einer äußeren Schutzhülle (SH) und dem Lichtwellenleiter (LW) eingebracht wird,
   **dadurch gekennzeichnet,**
   daß die nicht entgaste Füllmasse (FM) aus dem Vorratsbehälter (VB1) mittels einer ersten Pumpe (ZP11) abgeführt wird, daß bei oder nach dieser Pumpe (ZP11) eine Druckbegrenzung auf Werte zwischen 3 und 10 bar durchgeführt wird, daß die Füllmasse (FM) vom Ausgang dieser Pumpe (ZP11) aus über eine zweite, dosierende Pumpe (ZP12) der Füllnadel (FN) zugeführt wird.

2. Verfahren nach Anspruch 1,
   **dadurch gekennzeichnet,**
   daß durch die erste Pumpe (ZP11) die verbleibenden Lufteinschlüsse auf eine Größe unter einem Durchmesser von 5 µm zerkleinert werden und ggf. ein Teil in Lösung geht.

3. Verfahren nach einem der vorhergehenden Ansprüche,
   **dadurch gekennzeichnet,**
   daß der Druckbereich der Füllmasse (FM) bei der ersten Pumpe auf einen Wert um 9 bar eingestellt wird.

4. Verfahren nach einem der vorhergehenden Ansprüche,
   **dadurch gekennzeichnet,**
   daß die dosierende Pumpe (ZP12) so geregelt wird, daß durch sie gerade die gewünschte Menge an Füllmasse (FM) in die Schutzhülle (SH) eingeführt wird, um diese vollständig auszufüllen.

5. Verfahren nach einem der vorhergehenden Ansprüche,
   **dadurch gekennzeichnet,**
   daß mehrere Lichtwellenleiter gemeinsam in eine Schutzhülle (SH) eingeführt werden.

6. Verfahren nach einem der vorhergehenden Ansprüche,
   **dadurch gekennzeichnet,**
   daß der/die Lichtwellenleiter (LW) durch eine Vorbeschichtungseinrichtung (VB) zur Benetzung und/oder Bremsung für eine Teil-Füllmasse hindurchgeführt wird/werden, bevor die eigentliche Füllmasse zugeführt wird.

7. Verfahren nach einem der vorhergehenden Ansprüche,
   **dadurch gekennzeichnet,**
   daß die Füllmasse (FM) aus Öl oder aus vernetzenden Siliconmassen oder aus Kohlenwasserstoffpolymeren sowie ggf. einem Thixotropierungsmittel als Zusatz gebildet wird.

8. Verfahren nach Anspruch 7,
   **dadurch gekennzeichnet,**
   daß als Thixotropierungsmittel fein verteiltes $SiO_2$ vorzugsweise mit einer Teilchengröße unter 100 mµ Durchmesser verwendet wird.

9. Verfahren nach einem der vorhergehenden Ansprüche,
   **dadurch gekennzeichnet,**

daß die zweite Pumpe (ZP12) mit einem Außendruck zwischen 2 und 10 bar arbeitet.

10. Verfahren nach einem der vorhergehenden Ansprüche 10, 11,
**dadurch gekennzeichnet,**
daß der Vorratsbehälter (VB1) unter atmosphärischem Druck gehalten wird.

11. Vorrichtung zur Durchführung des Verfahrens nach einem der vorhergehenden Ansprüche,
**dadurch gekennzeichnet,**
daß für die nicht entgaste Füllmasse (FM) ein Vorratsbehälter (VB1) vorgesehen ist, an dessen Ausgang die erste Pumpe (ZP11) angeschlossen ist,
daß nach dieser Pumpe (ZP11) eine Druckbegrenzungseinrichtung (UV) vorgesehen ist und daß vor der Füllnadel (FN) eine zweite, dosierende Pumpe (ZP12) angeordnet ist.

12. Vorrichtung nach Anspruch 11,
**dadurch gekennzeichnet,**
daß als Druckbegrenzungseinrichtung ein Überstromventil (UV) vorgesehen ist.

13. Vorrichtung nach einem der Ansprüche 11 oder 12,
**dadurch gekennzeichnet,**
daß als Pumpen Zahnradpumpen verwendet sind.

## Claims

1. Method for preparing and feeding filling compound for optical waveguide fibres (LWA), in which the filling compound is taken from a storage vessel (VB13) and introduced by means of a filling needle (FN) into the free space between an outer protective sheath (SH) and the optical waveguide (LW), characterised in that the non-degassed filling compound (FM) is led off from the storage vessel (VB1) by means of a first pump (ZP11), in that at or downstream of this pump (ZP11) a limitation of pressure to values between 3 and 10 bar is effected, and in that the filling compound (FM) is supplied to the filling needle (FN) from the output of this pump (ZP11) via a second, metering pump (ZP12).

2. Method according to Claim 1, characterised in that by means of the first pump (ZP11) the remaining air inclusions are reduced to a size below a diameter of 5 $\mu$m, and a portion possibly goes into solution.

3. Method according to one of the preceding claims, characterised in that the pressure range of the filling compound (FM) is set in the case of the first pump to a value around 9 bar.

4. Method according to one of the preceding claims, characterised in that the metering pump (ZP12) is controlled such that it introduces into the protective sheath (SH) precisely the quantity of the filling compound (FM) desired in order to fill it up completely.

5. Method according to one of the preceding claims, characterised in that a plurality of optical waveguides are introduced jointly into a protective sheath (SH).

6. Method according to one of the preceding claims, characterised in that before the actual filling compound is supplied the optical waveguide/waveguides (LW) is/are guided through a precoating device (VB) for wetting and/or braking a partial filling compound.

7. Method according to one of the preceding claims, characterised in that the filling compound (FM) is formed from oil or from crosslinked silicone compounds or from hydrocarbon polymers and, if appropriate, a thixotropic agent as additive.

8. Method according to Claim 7, characterised in that finely distributed $SiO_2$, preferably having a particle size below 100 $\mu$m diameter, is used as thixotropic agent.

9. Method according to one of the preceding claims, characterised in that the second pump (ZP12) operates with an external pressure of between 2 and 10 bar.

10. Method according to one of the preceding Claims 10, 11, characterised in that the storage vessel (VB1) is kept below atmospheric pressure.

11. Apparatus for carrying out the method according to one of the preceding claims, characterised in that a storage vessel (VB1), to whose output the first pump (ZP11) is connected, is provided for the non-degassed filling compound (FM), in that a pressure-limiting device (UV) is provided downstream of this pump (ZP11), and in that a second, metering pump (ZP12) is arranged upstream of the filling needle (FN).

12. Apparatus according to Claim 11, characterised in that a relief valve (UV) is provided as the pressure-limiting device.

13. Apparatus according to one of Claims 11 or 12, characterised in that gear pumps are used as pumps.

**Revendications**

1. Procédé de préparation et d'amenée d'une masse de remplissage pour des conducteurs (LWA) de guides d'ondes optiques pour lesquels la masse de remplissage est prélevée d'un réservoir (VB1-3) et est introduite, au moyen d'une aiguille de remplissage (FN), dans l'espace libre présent entre une gaine extérieure de protection (SH) et le guide d'ondes optiques (LW), caractérisé par le fait que la masse de remplissage non dégazée (FM) est retirée du réservoir (VB1) à l'aide d'une première pompe (ZP11), qu'une limitation de la pression à des valeurs comprises entre 3 et 10 bars est réalisée au niveau ou en aval de cette pompe (ZP11), que la masse de remplissage (FM) est envoyée depuis la sortie de cette pompe (ZP11) à l'aiguille de remplissage (FN) par l'intermédiaire d'une seconde pompe de dosage (ZP12).

2. Procédé suivant la revendication 1, caractérisé par le fait que les inclusions d'air subsistantes sont réduites par la première pompe (ZP11) à une taille inférieure à un diamètre de 5 $\mu$m et éventuellement une partie de ces inclusions d'air passent en solution.

3. Procédé suivant l'une des revendications précédentes, caractérisé par le fait que la gamme de pressions de la masse de remplissage (FM) est réglée à une valeur avoisinant 9 bars dans la première pompe.

4. Procédé suivant l'une des revendications précédentes, caractérisé par le fait que la pompe de dosage (ZP12) est réglée de telle sorte qu'elle introduit exactement la quantité désirée de la masse de remplissage (FM) dans la gaine de protection (SH) pour remplir complètement cette dernière.

5. Procédé suivant l'une des revendications précédentes, caractérisé par le fait que plusieurs guides d'ondes optiques sont introduits en commun dans une gaine de protection (SH).

6. Procédé suivant l'une des revendications précédentes, caractérisé par le fait que le et/ou les guides d'ondes optiques (LW) est/sont introduits dans un dispositif d'enduction préalable (VB) utilisé pour le mouillage et/ou le freinage d'une masse de remplissage partiel, avant que la masse de remplissage proprement dite soit introduite.

7. Procédé suivant l'une des revendications précédentes, caractérisé par le fait que la masse de remplissage (FM) est constituée par de l'huile ou par des masses de silicone qui réticulent ou par des polymères à base d'hydrocarbures ainsi que, éventuellement, par un agent thixotrope en tant qu'additif.

8. Procédé suivant la revendication 7, caractérisé par le fait qu'on utilise comme agent thixotrope du $SiO_2$ finement divisé possédant des particules ayant de préférence un diamètre inférieur à 100 $\mu$m.

9. Procédé suivant l'une des revendications précédentes, caractérisé par le fait que la seconde pompe (ZP12) travaille avec une pression de refoulement comprise entre 2 et 10 bars.

10. Procédé suivant l'une des revendications précédentes, caractérisé par le fait que le réservoir (VB1) est maintenu à la pression atmosphérique.

11. Dispositif pour la mise en oeuvre du procédé suivant l'une des revendications précédentes, caractérisé par le fait que pour la masse de remplissage non dégazée (FM) il est prévu un réservoir (VB1), à la sortie duquel est raccordée la première pompe (ZP11), qu'en aval de cette pompe (ZP11), il est prévu un dispositif (UV) de limitation de la pression, et qu'en amont de l'aiguille de remplissage (FN) est disposée une seconde pompe de dosage (ZP12).

12. Dispositif suivant la revendication 11, caractérisé par le fait qu'une soupape de décharge (UV) est prévue en tant que dispositif de limitation de la pression.

13. Dispositif suivant l'une des revendications 11 ou 12, caractérisé par le fait qu'on utilise, comme pompes, des pompes à engrenages.